(19) Europäisches Patentamt
European Patent Office
Office européen des brevets

(11) **EP 2 087 608 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(21) Anmeldenummer: **07821662.9**

(22) Anmeldetag: **22.10.2007**

(51) Int Cl.:
*H04B 3/32* (2006.01)

(86) Internationale Anmeldenummer:
**PCT/EP2007/061298**

(87) Internationale Veröffentlichungsnummer:
**WO 2008/052904 (08.05.2008 Gazette 2008/19)**

(54) **Verfahren, Anordnung und Einrichtung zur Prekompensation von übersprechen in einem DSL MIMO System**

Method, arrangement and device for the precompensation of crosstalk in a DSL MIMO system

Procédé, disposition et module de précompensation de diaphonie dans un système MIMO DSL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **31.10.2006 DE 102006051435**

(43) Veröffentlichungstag der Anmeldung:
**12.08.2009 Patentblatt 2009/33**

(73) Patentinhaber: **Nokia Siemens Networks GmbH & Co. KG
81541 München (DE)**

(72) Erfinder:
• **KOZEK, Werner
1220 Wien (AT)**

• **SCHNITTER, Matthias
80689 München (DE)**

(56) Entgegenhaltungen:
**EP-A- 1 109 328        WO-A-2004/105287**

• **GINIS G ET AL: "VECTORED TRANSMISSION FOR DIGITAL SUBSCRIBER LINE SYSTEMS" IEEE JOURNAL ON SELECTED AREAS IN COMMUNICATIONS, IEEE SERVICE CENTER, PISCATAWAY, NJ, US, Bd. 20, Nr. 5, Juni 2002 (2002-06), Seiten 1085-1104, XP001143167 ISSN: 0733-8716 in der Anmeldung erwähnt**

EP 2 087 608 B1

## Beschreibung

Die Erfindung betrifft ein Verfahren, eine Anordnung und eine Einrichtung Verfahren zur Übertragung von Daten über mehrere Kanäle.

In aktuellen Telekommunikationsnetzen werden von den Teilnehmern zunehmend höhere Übertragungsraten und somit eine größere zur Verfügung stehende Bandbreite gewünscht. Diese höheren Übertragungsraten werden notwendig, da über einzelne Kommunikationsnetze aktuell und zukünftig mehrere extrem datenintensive Anwendungen angeboten werden. So bieten die Betreiber von Telekommunikationsnetzen bandbreitenintensive Anwendungen wie einen schnellen Zugang zum Internet oder auch Videoübertragungen über das Internet (z.B. IPTV: "Internet Protocol Television") an. Zugleich verlangen viele Nutzer jedoch auch eine möglichst schnelle und in Realzeit ablaufende Übertragung der Daten, um Dienste wie beispielsweise Voice over IP ("VoIP" - Sprachübermittlung mittels des Internet-Protokolls) oder auch Online-Spiele ohne Nachteile nutzen zu können.

Derzeitige Verfahren zur Übertragung derartiger Datenmengen über das herkömmliche Telefonnetz sind Verfahren, die nach dem xDSL-Verfahren (z.B. ADSL, ADSL2, VDSL) arbeiten. Bei der überwiegenden Mehrzahl derartiger, aktuell standardisierter Breitbandzugriffsverfahren zielt das Grundkonzept auf die kontinuierliche Übertragung mit konstanter Bitrate, konstanter Bitfehlerwahrscheinlichkeit und konstantem Sendespektrum ab. Zwar werden beim Aufbau einer Kommunikationsverbindung, also beispielsweise beim Starten des auf der Teilnehmerseite angeordneten DSL-Modems, während der so.genannten Trainingsphase unter Beachtung der Kanaleigenschaften unter anderem zum Beispiel Rate, Bitfehlerwahrscheinlichkeit und Latenzzeit der Verbindung konfiguriert, im anschließenden laufenden Be-Beim Nahnebensprechen, auch Querdämpfung oder englisch "Near End Crosstalk" (NEXT) genannt, handelt es sich um ein Maß für die Unterdrückung des Übersprechens zwischen zwei benachbarten Adernpaaren am Ende oder Anfang eines Kabels.

Das Nahnebensprechen gibt an, wie stark das Signal eines A-dernpaars in das andere Adernpaar induziert wird. Das Nahnebensprechen ist relativ längenunabhängig, aber stark frequenzabhängig. NEXT-Werte können durch konstruktive Maßnahmen beeinflusst werden, wie unterschiedliche Schlaglängen oder zusätzliche Schirmung der Adernpaare.

Das Fernnebensprechen Übersprechen hingegen bezieht sich auf das Leitungsende, also das Ende der Übertragungsstrecke. Das in eine Leitung eingespeiste Signal ist am Leitungsende um die Kabeldämpfung verringert. Das Übersprechen dieses Signals auf eine andere Leitung wird als Fernnebensprechen oder "Far End Crosstalk" (FEXT) bezeichnet.

Ein Dokument, welches sich mit Problemen des Übersprechens in Mehrkanalkommunikationssystemen beschäftigt, ist beispielsweise die internationale Patentanmeldung WO2004/105287A2. Hierin wird ein Verfahren erläutert, wie durch geeignete Vorcodierung die Auswirkungen durch Übersprechen abgeschwächt werden können.

Die Aufgabe der Erfindung ist, Störungen auf Leitungen innerhalb eines Kommunikationssystems zu reduzieren.

Diese Aufgabe wird ausgehend von einem Verfahren gemäß dem Patentanspruch 1 sowie durch eine Einrichtung gemäß dem Patentanspruch 8 durch deren kennzeichnende Merkmale gelöst.

Im Rahmen des erfindungsgemäßen Verfahrens wird eine Übertragung von Daten über mehrere Kanäle durchgeführt. Der wesentliche Aspekt des erfindungsgemäßen Verfahrens ist, dass über zumindest einen Kanal zusätzliche Daten übertragen werden und durch die Übertragung der zusätzlichen Daten die Übertragung der Daten in zumindest einem der weiteren Kanäle gezielt beeinflusst wird. Es kann somit durch das Verfahren die Datenübertragung auf einem Übertragungskanal von außerhalb beeinflusst werden.

Beim Nahnebensprechen, auch Querdämpfung oder englisch "Near End Crosstalk"(NEXT)genannt, handelt es sich um ein Maß für die Unterdrückung des Übersprechens zwischen zwei benachbarten Adernpaaren am Ende oder Anfang eines Kabels.

Das Nahnebensprechen gibt an, wie stark das Signal eines A-dernpaars in das andere Adernpaar induziert wird. Das Nahnebensprechen ist relativ längenunabhängig, aber stark frequenzabhängig. NEXT-Werte können durch konstruktive Maßnahmen beeinflusst werden, wie unterschiedliche Schlaglängen oder zusätzliche Schirmung der Adernpaare.

Das Fernnebensprechen Übersprechen hingegen bezieht sich auf das Leitungsende, also das Ende der Übertragungsstrecke. Das in eine Leitung eingespeiste Signal ist am Leitungsende um die Kabeldämpfung verringert. Das Übersprechen dieses Signals auf eine andere Leitung wird als Fernnebensprechen oder "Far End Crosstalk" (FEXT) bezeichnet.

Die Aufgabe der Erfindung ist, Störungen auf Leitungen innerhalb eines Kommunikationssystems zu reduzieren.

Diese Aufgabe wird ausgehend von einem Verfahren gemäß dem Patentanspruch 1 sowie durch eine Anordnung und eine Einrichtung gemäß den Patentansprüchen 8 und 11 durch deren kennzeichnende Merkmale gelöst.

Im Rahmen des erfindungsgemäßen Verfahrens wird eine Übertragung von Daten über mehrere Kanäle durchgeführt. Der wesentliche Aspekt des erfindungsgemäßen Verfahrens ist, dass über zumindest einen Kanal zusätzliche Daten übertragen werden und durch die Übertragung der zusätzlichen Daten die Übertragung der Daten in zumindest einem der weiteren Kanäle gezielt beeinflusst wird. Es kann somit durch das Verfahren die Datenübertragung auf einem Übertragungskanal von außerhalb beeinflusst werden.

Vorteilhaft wird die Übertragung der Daten in dem zumindest einen der weiteren Kanäle derart beeinflusst, dass Störungen in dem zumindest einen der weiteren Kanäle verringert werden. Durch diese Weiterbildung können Störungen, wie sie in einem Kommunikationssystem beispielsweise durch Nebensprechen auftreten können, reduziert werden.

Bei einer weiteren vorteilhafte Weiterbildung des erfindungsgemäßen Verfahrens werden die zusätzlichen Daten anstelle von Leerdaten übertragen werden - Anspruch 2. Leerdaten bedeutet in diesem Zusammenhang beispielsweise "keine Nutzdaten". D.h. in Phasen, in denen auf einem bestimmten Kanal kein Nutzdaten übertragen werden, können die zusätzlichen Daten auf diesem Kanal übertragen werden.

Bei einer anderen Weiterbildung des Verfahrens werden die zusätzlichen Daten an einem Empfänger verworfen werden - Anspruch 3. Vorteilhaft stören diese zusätzlichen Daten den Empfänger somit nicht.

Werden die zusätzlichen Daten gemäß einer weiteren Ausbildung des erfindungsgemäßen Verfahrens derart ausgestaltet, dass die zusätzlichen Daten aufgrund einer Verletzung von in einem Standard definierten Vorgaben verworfen werden (Anspruch 4), so können die Empfangsgeräte weiterhin standardkonform arbeiten, d.h. es ist vorteilhaft keine Veränderung an beispielsweise Konstruktion oder Software der Endgeräte notwendig.

Weitere vorteilhafte Ausführungen des erfindungsgemäßen Verfahrens sowie eine Anordnung und eine Einrichtung zur Übertragung von Daten über mehrere Kanäle können den weiteren Ansprüchen entnommen werden.

Im Folgenden wird die Erfindung mit Hilfe der beigefügten Figuren detaillierter erläutert. Dabei zeigt:

Fig. 1     eine Modellierung von Nah- und Fernnebensprechen durch ein MIMO-System,

Fig. 2     eine schematische Darstellung der sendeseitigen Zerle- gung der Verarbeitungskette,

Fig. 3     eine schematische Darstellung der empfangsseitigen Zerlegung der Verarbeitungskette,

Fig. 4     eine schematische Darstellung zur Definition der MIMO- Systemmatrix im Frequenzbereich,

Fig. 5     eine Darstellung des Grundschemas einer herkömmlichen Prekompensation,

Fig. 6     eine schematische Darstellung der Cross-Layer-MIMO- Prekompensation in einer Linecard-Variante,

Fig. 7     eine schematische Darstellung der Cross-Layer-MIMO- Prekompensation in einer Backbone-Variante,

Fig. 8     eine Tabelle, die Maßnahmen darstellt, um einen Ver- wurf von Ethernetrahmen zu erzwingen, und

Fig. 9     den schematischen Aufbau eines Ethernetrahmens ohne Präambel und Start-Frame-Delimiter.

Eine erste Möglichkeit zur Verringerung des Einflusses von Übersprechstörungen ist, die Datenübertragung bedarfsgerecht zu schalten bzw. das Spektrum individuell zu modifizieren. Mit anderen Worten kann die Datenübertragung auf jenen Leitungen, auf denen in einem bestimmten Moment keine Nutzdaten übertragen werden, begrenzt oder sogar komplett eingestellt werden. Wie oben beschrieben wird dies jedoch bewusst zumeist nicht durchgeführt, einerseits um, wie oben erwähnt, die ausgehandelte Datenrate weiterhin kontinuierlich verwenden zu können, zusätzlich jedoch auch, um die zeitliche Stationarität und spektrale Weißheit der auf andere Teilnehmer wirkenden Störungen sicherzustellen.

Abgesehen von der zeitlichen Variabilität des Nutzdatenverkehrs ist auch eine unvermeidliche Nichtstationarität durch das An- bzw. Abschalten von CPEs ("Customer Premises Equipment" - kundeneigenes Endgerät) auf der Teilnehmerseite gegeben. Zwar wird seitens der Netzbetreiber den Teilnehmern empfohlen, das CPE jederzeit eingeschaltet zu lassen, jedoch schalten viele Kunden ihre CPEs allein wegen des Stromverbrauchs häufiger aus.

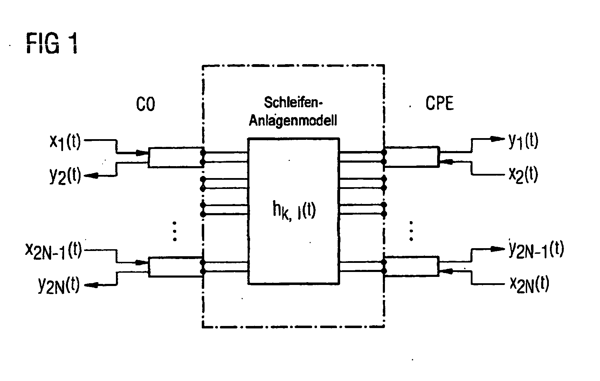

Eine Modellierung von Nah- und Fernnebensprechen im Zusammenhang mit xDSL-Breitbandanschlusstechnik ist in Fig. 1 dargestellt. Darin steht das "Loop plant model" für die gesamte Leitungsinfrastruktur zwischen der Aggregation und dem Teilnehmer also einschließlich Hauptkabelverteiler, eventueller Kabelverzweiger und sämtlicher (unerwünschter) Nebensprechbeziehungen. Insbesondere ist es vorteilhaft, die Downstream-Richtung zum Teilnehmer (= CPE = customer premises equipment) und Upstream-Richtung zum Amt (= CO = central office) als getrennte virtuelle Ports zu modellieren, da die Übertragung in unterschiedlichen Richtungen erfolgt und dabei auch wechselseitige Störungen auftreten können.

Ein lineares, zeitinvariantes MIMO-System (MIMO: "Multiple Input Multiple Output" - System mit mehreren Eingangs- und Ausgangsgrößen) ist durch die Matrix von Impulsantworten $h_{k,l}(t)$ festgelegt (* steht für die Faltung):

$$y_k(t) = \sum_{l=0}^{2N} \left( h_{k,l} * x_l \right)(t) \qquad \text{Gleichung (1)}$$

Dabei entsprechen die Diagonal-Komponenten $h_{k,l}(t)$ den erwünschten Übertragungskanälen (es handelt sich also um die so genannten Leitungsimpulsantworten), die Außendiagonalelemente $h_{t,l}(t), k{\neq}l$ charakterisieren das unerwünschte Nebensprechen zwischen dem virtuellem Port mit Index k und dem Port mit Index 1. Ein reeller Port setzt sich demnach aus zwei virtuellen Ports zusammen, aus einem für die Upstream-Richtung und aus einem für die Downstream-Richtung. Damit kann insbesondere auch so genanntes SELFT-NEXT (near-end crosstalk zwischen Upstream und Downstream desselben physikalischen Ports) durch ein kompaktes mathematisches Modell erfasst werden.

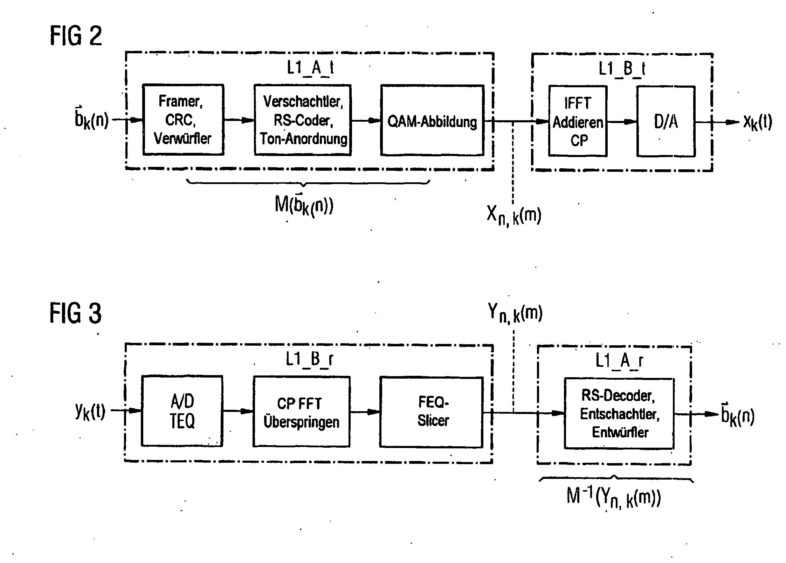

Für die folgende Betrachtung wird, wie in Fig. 2 zu sehen, eine Zerlegung der Verarbeitungskette im Sender des Port $k$ durchgeführt. Im Speziellen wird die Verarbeitungskette zerlegt in:

(i) einen abstrahierten Bitmodulator (L1_A_t), der die Abbildung eines Bitvektors $\bar{b}_k(n)$ auf die komplexwertigen QAM-Koeffizienten $X_{n,k}(m)$ beschreibt (QAM: Quadraturamplitudenmodulation"), und

(ii) einen mit L1_B_t bezeichneten Abschnitt, in dem die Sendesignalformung mittels IFFT, das Hinzufügen des Cyclic-Prefix sowie eine Digital-Analog-Wandlung (D/A-Wandlung) zusammengefasst sind. (Das so genannte "Cyclic Prefix" ist die Wiederholung des Endes eines Symbols am Anfang eines OFDM-Symbols - OFDM steht für "orthogonal frequency-division multiplexing").

Insgesamt ergibt sich am Ausgang des in Fig.2 dargestellten Blockdiagramms das analoge Sendesignal $x(t)$. Darin bezeichnet $m$ den Trägerfrequenzindex und $n$ den Zeitindex im DMT-Symboltakt. Mit DMT wird die "discrete multitone transmission" bezeichnet, das z.B. bei ADSL verwendete Modulationsverfahren.

Fig. 3 stellt die duale Zerlegung für die Empfangsseite dar. Darin steht $y(t)$ für das analoge Empfangsignal, $Y_{n,k}(m)$ für die bereits entschiedenen komplexen QAM-Empfangssymbole und $\bar{b}_k(n)$ für den aus der Decodierung resultierenden Bitvektor.

Unter der Voraussetzung von Rahmensynchronisation der DMT/OFDM Symbole und ausreichender Länge des Cyclic-Prefix geht die zeitkontinuierliche Faltung aus Gleichung (1) in eine Multiplikation von komplexen QAM-Koeffizienten wie folgt über:

$$Y_{n,k}(m) = \sum_{l=0}^{2N} H_{k,l}(m) X_{n,l}(m) \qquad \text{Gleichung (2)}$$

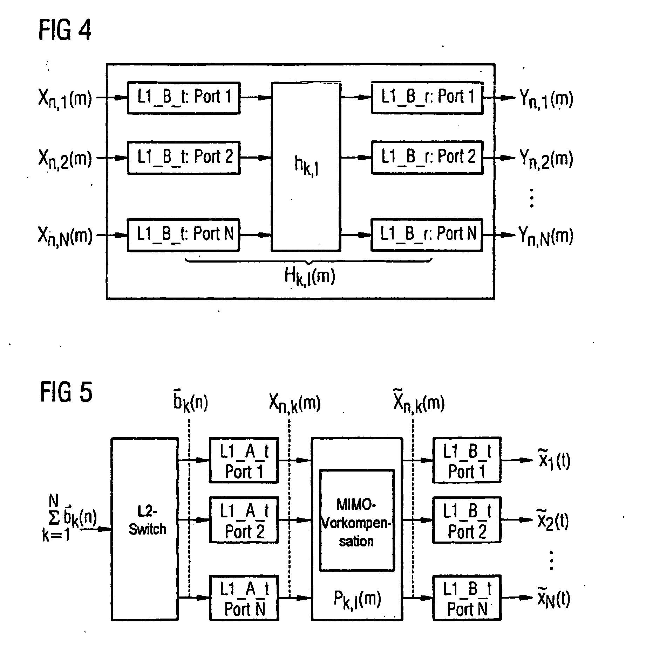

Hier steht $X_{n,l}(m)$ für die QAM Koeffizienten des Sendesymbols und $Y_{n,k}(m)$ sind die entsprechenden komplexen Empfangssymbole vor der Entscheidung ($l$ ist der Portindex, $m$ der Trägerfrequenzindex, $n$ der Zeitindex im DMT-Symboltakt). Der Kanal wird als zeitinvariant angenommen, weshalb keine Abhängigkeit vom Zeitindex besteht. $H_{k,l}(m)$ entspricht im Wesentlichen den Abtastwerten der Fouriertransformierten der Kanalimpulsantworten, abgetastet im Raster der Träger der Multiträgermodulation. Es ist zu betonen, dass $H_{k,l}(m)$ nicht nur die Physik des Übertragungskanals sondern auch die IFFT-Stufe sowie die Add-Cyclic-Prefix-Stufe der Verarbeitungskette des Sendemodems und die Skip-Cyclic-Prefix-Stufe sowie die FFT-Stufe der Verarbeitungskette des Empfangsmodems beinhaltet. Ein Modell hierfür ist in Fig. 4 angegeben.

In aktuellen Kommunikationsnetzen wird oftmals die so genannte MIMO-Prekompensation eingesetzt. Diese zielt auf eine sendeseitige Vorkompensation des Nebensprechens durch Bildung von Linearkombinationen der QAM-Sendesymbole wie folgt ab:

$$\tilde{X}_{n,k}(m) = \sum_{l=0}^{2N-1} P_{k,l}(m) X_{n,l}(m) \qquad \text{Gleichung (3)}$$

Hierbei steht $\tilde{X}_{n,k}(m)$ für die modifizierten Sendesymbole (dabei ist *k* der Portindex, *m* der Trägerfrequenzindex und *n* der Zeitindex). Die Prekompensationsmatrizen $P_{k,l}(m)$ werden im Wesentlichen durch Inversion der MIMO-Kanalmatrix pro Trägerindex *m* gebildet:

$$ P_{k,l}(m) = (H_{k,l})^{-1}(m) \qquad \text{Gleichung (4)} $$

Gleichung (3) zeigt demnach, dass zum Sendesignal des k-ten Ports bewusst die Sendesignale aller anderen Ports phasenrichtig zugemischt werden, so dass diese sich bis zum Empfänger mit den Nebensprechsignalen destruktiv überlagern und dadurch ausgelöscht werden. Da diese Prekompensation die ausgesandte spektrale Leistungsdichte modifiziert, sind eventuell zusätzlich zur linearen Modifikation in Gleichung (4) auch (einfache) nichtlineare Eingriffe notwendig.

Es kann beispielsweise mit einer geeigneten Modulo-Operation beim Senden (abhängig vom QAM-Modulationsgrad und QAM-Konstellation) sichergestellt werden, dass die erlaubte Sendeleistung pro Träger nicht überschritten wird. Eine derartige Vorgangsweise ist beispielsweise in "G. Ginis, J.M. Cioffi, Vectored Transmission for Digital Subscriber Line Systems, IEEE JSAC special issue on twistedpair transmission, Vol. 20, Issue 5, pp. 1085-1104, June 2002" und "G. Tauböck, W. Henkel, MIMO systems in the subscriber-line network, 5th International OFDM Workshop 2000, Hamburg" beschrieben und wird daher hierin nicht näher mathematisch erläutert. Anzumerken ist hier jedoch, dass die sendeseitige Modulo-Operation auch eine empfangsseitige Modulo-Operation bedingt und daher zumeist nicht ohne ein Upgrade der Firmware des Teilnehmerendgeräts durchführbar ist.

Ist die MIMO-Kanalmatrix stark diagonaldominant (dies ist bei xDSL stets der Fall, nicht jedoch bei wireless Anwendung wie zum Beispiel WIMAX), kann auf eine solche nichtlineare Leistungsregelung durch Modulo-Operation verzichtet werden.

Fig. 5 zeigt in einem schematischen Blockdiagramm das Grundschema einer derartigen MIMO-Prekompensation. Vorraussetzung für diese Prekompensation ist dabei, dass die MIMO-Kanalmatrix $H_{k,l}(m)$ bekannt ist, d.h. diese Matrix muss vor der eigentlichen Datenübertragung beispielsweise durch einen geeigneten Identifikationsalgorithmus ermittelt werden.

Auch wenn obige Beschreibung speziell auf DMT-artige Multiträgermodulationssysteme zugeschnitten ist, sind die Grundprinzipien auf beliebige FFT-basierte Modulationsverfahren anwendbar: Es verändert sich jeweils lediglich der Inhalt der Blöcke L1_A und L1_B.

Wie bereits oben angedeutet, wird üblicherweise die MIMO-Signalverarbeitung strikt von den höheren Schichten ("Layern") des in der Kommunikationstechnik gebräuchlichen Schichtenmodells getrennt, d.h. die Signalverarbeitung läuft auch ohne Nutzdatenverkehr kontinuierlich weiter. Wird von jetzt üblichen Aggregationsfaktoren von 1:50 bei Breitbandkunden mit durchschnittlicher Nutzung ausgegangen, so wird demnach bezogen auf IP-Transport nur maximal 1/50 des bittransparenten Übertragungskanals wirklich für Nutzdaten verwendet.

Diese technologische Schwachstelle wird durch das erfindungsgemäße Konzept ausgenutzt bzw. überwunden. Ein Gedanke dabei ist, den statistischen Multiplex des IP-Traffic (Layer 3 - L3) durchgängig in den Physical-Layer (L1) einzubringen, so dass zum Beispiel sendeseitiges "Schweigen" auf L3 auch mit sendeseitigem approximativem "Schweigen" auf L1 korrespondiert bzw. eine Übertragung oder ein so genannter "Broadcast" auf L3 auch mit einem physikalischen Broadcast auf L1 korrespondiert. Darüber hinaus können anstatt von Leereinheiten (beispielsweise ATM Idle Cells, Ethernet Leerrahmen) auch MI-MO-optimierte Datenpakete gesendet werden, die vom direkten Empfänger verworfen werden, die aber für die Querkanäle physikalisch hilfreich sind (besonders auch in der Trainingsphase). Dieses Konzept wird "Cross-Layer Modulation" genannt.

Formal bestehen die zu übertragenden Bitfolgen aus einer zumindest innerhalb einer IP-Session festen Rahmeninformation, die im Folgenden durch den Bitmustervektor $\bar{b}_0(n)$ beschrieben wird, sowie einem Payload-Bitvektor $\bar{d}_k(n)$. Wird die Maske, welche Rahmeninformation und Nutzinformation trennt, mit $B_0$ bezeichnet, so gilt:

$$ \bar{b}_k(n) = \bar{b}_0(n) \oplus (B_0 \otimes \bar{d}_k(n)) \qquad \text{Gleichung (5)} $$

Dabei stehen $\otimes$ für eine binäre UND-Verknüpfung (GF(2) Multiplikation) und $\oplus$ für eine binäre XOR-Verknüpfung (GF(2) Addition). Wird der Verarbeitungsblock L1_A_t wie folgt in einen Codierungsblock und den QAM-mapper zerlegt

$$M\left(\vec{b}_k(n)\right) = Q\left(C\left(\vec{b}_k(n)\right)\right), \qquad \text{Gleichung (6)}$$

so gilt wegen der GF(2)-Linearität von Scrambler, Interleaver, Reed-Solomon-Coder das folgende Superpositionsgesetz:

$$C\left(\vec{b}_k(n)\right) = C\left(\vec{b}_0(n)\right) \oplus C\left(B_0 \otimes \vec{d}_k(n)\right) \quad \text{Gleichung (7)}$$

D.h. es ist grundsätzlich möglich, die Overheadbits und die Datenbits getrennt zu kodieren und diese anschließend über eine einfache XOR-Operation miteinander zu verknüpfen, um die Codierung des Gesamtbitmusters zu berechnen.

Die mathematische Umsetzung der erfindungsgemäßen "Cross-Layer-Idee" erfordert es, zu einem gewünschten komplexen Sendesymbol $\vec{X}_d$ jenes Bitmuster zu finden, welches mittels der Modulationsabbildung eine optimale Approximation des gewünschten Symbolvektors $\vec{X}_d$ mit einem gültigen QAM-Sendesymbol erreicht. Hierbei ist $\vec{X}_d$ im Allgemeinen kein zulässiges QAM-Sendesymbol, beispielsweise kann $\vec{X}_d=\vec{0}$ gefordert sein (wenn es um eine maximale Absenkung der Sendeleistung geht). Deshalb kann nicht von einer gewöhnlichen Inversion des nichtlinearen $M()$-Operators gesprochen werden, es handelt sich vielmehr um folgendes binäres Optimierungsproblem:

$$\vec{d}_{opt} = \arg \min_{\vec{d}} \left\| M\left(\vec{b}_0 \oplus \left(B_0 \otimes \vec{d}\right)\right) - \vec{X}_d \right\| \quad \text{Gleichung (8)}$$

Dabei ist die Vektornorm die Summe über alle Träger über den Betrag der komplexen Differenzen zwischen den komplexwertigen Vektoren

$$\left\| \vec{X}_1 - \vec{X}_2 \right\| \overset{def}{=} \sum_m \left| X_1(m) - X_2(m) \right| \qquad \text{Gleichung (9)}$$

Wegen der Nichtlinearität des $M()$-Operators kann eine einfache Lösung dieses binären Vektoroptimierungsproblems mit großer Sicherheit ausgeschlossen werden. Daher wird beispielsweise eine im Folgenden beschriebene semi-heuristische Umgebungssuchmethode zur approximativen Lösung von Gleichung (8) vorgeschlagen:

In einem 1. Schritt wird dabei eine gewisse Anzahl von so genannten "Kandidatensymbolvektoren" mit (relativ kleinem) euklidschem Abstand $q$ vom gewünschten Symbol gesucht:

$$\Omega = \left\{ \vec{X} \in Q \mid \left\| \vec{X} - \vec{X}_d \right\| < q \right\} \qquad \text{Gleichung (10)}$$

Anschließend wird in Schritt 2 zu der Menge der QAM-Kandidatensymbolvektoren $\Omega$ eine korrespondierende Menge von "Kandidaten-Bitmustern" $\Psi$ berechnet:

$$\Psi = \left\{ \vec{b} = M^{-1}(\vec{X}), \quad \vec{X} \in \Omega \right\}, \qquad \text{Gleichung (11)}$$

In Schritt 3 wird daraufhin innerhalb der Menge von Kandidaten-Bitmustern $\Psi$ solange gesucht bis ein gültiges Bitmuster im Sinne der Codierungs- und Overheadinformation gefunden ist:

$$\widetilde{\vec{d}} = B_0 \otimes \widetilde{\vec{d}} \quad , \quad \vec{b}_0 \oplus \left( B_0 \otimes \widetilde{\vec{d}} \right) \in \Psi \qquad\qquad \texttt{Gleichung (12)}$$

Bleibt die Suche entsprechend Gleichung (12) erfolglos, so wird der Abstand $q$ vergrößert es wird erneut bei Schritt 1 begonnen.

Die Komplexität des erfindungsgemäßen Verfahrens hängt ganz entscheidend von der Komplexität der Verarbeitungsblocks L1_A_t bzw. L1_A_r ab. Umfassen diese Blöcke zum Beispiel einen Reed-Solomon-Decoder, so muss in Schritt 3 der obigen Iteration eine mehrmalige Reed-Solomon-Decodierung durchgeführt werden, was einen erheblichen Rechenaufwand bedeutet. Bei den DMT-basierten xDSL Verfahren lässt sich der L1_A_t - Block konfigurieren. Beispielsweise sollte hier eine möglichst einfache Konfiguration geschaltet werden (d.h. zum Beispiels Reed-Solomon abgeschaltet, Interleaver mit minimaler Tiefe, Tone-Ordering abgeschaltet), wodurch sich eine deutliche Vereinfachung der oben beschriebenen Iteration erreichen lässt.

Ein weiterer Erfindungsgedanke ist die Einbettung der oben beschriebenen Cross-Layer-Modulation in existierende Zugangsnetze oder Access-Systeme.

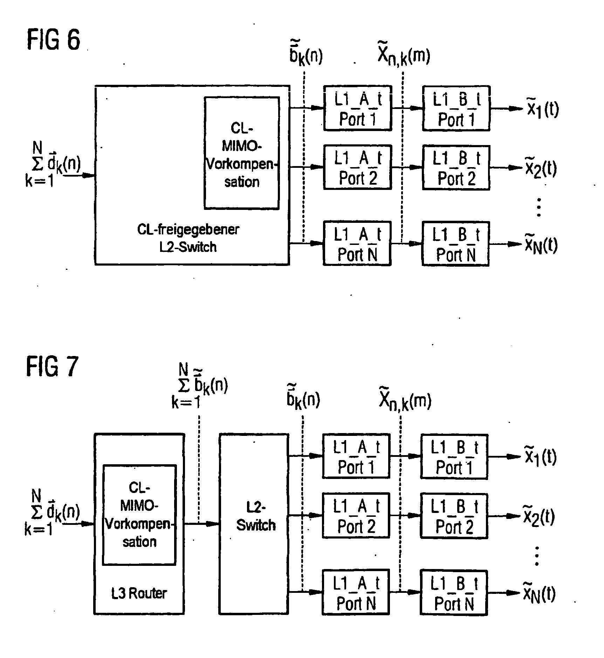

Fig. 6 zeigt eine beispielhafte Anwendung der Cross-Layer-Modulation zur MIMO-Prekompensation: dabei wird im Vergleich zur herkömmlichen MIMO-Prekompensation (Fig. 5) die MIMO-spezifische Verarbeitung beispielsweise vom Modem-Chipsatz in den Netzwerkprozessor des Layer-2-Switchs verlagert. In Bezug auf die Prozessortechnologie gibt es dabei kein grundsätzliches Problem, da alle Operationen nur auf Binäroperationen bzw. Table-Lookups zurückführbar sind.

Die modifizierten Bitvektoren der einzelnen Ports sind mit $\widetilde{\widetilde{b}}_{0}{}^{|}(n)$ bezeichnet; die Summenbitrate dieser Vektoren ist im Allgemeinen ein der vom Backbone des Netzes stammenden Bitrate.

Der Layer-3-Payload ist hier formal mit $\vec{d}(n)$ bezeichnet. Die eingehenden Daten werden wie üblich zunächst in einem portspezifischen Pufferbereich zwischengespeichert. Nach der Abarbeitung des Pufferbereichs werden jedoch insbesondere keine "sinnlosen" Zufallsdaten an den Layer 1 weitergegeben, es wird vielmehr gemäß der zuvor beschriebenen Prozedur jener Binärvektor ermittelt, der entsprechend zur Prekompensation des Nebensprechens auf den anderen aktiven Ports beiträgt. Bei den üblichen Aggregationsfaktoren kann davon ausgegangen werden, dass nur wenige Ports gleichzeitig aktiv sind und dass allein durch die Berücksichtigung der MIMO-Matrixstruktur beim Puffer-Auslesen ein statistischer Zeitmultiplex innerhalb der virtuellen Bündelgruppen erreicht werden kann. D.h. in einer Gruppe von sich wechselseitig störenden Ports führt immer lediglich ein Port eine Nutzdatenübertragung durch, während die anderen Ports via Cross-Layer-Modulation praktisch "schweigen" bzw. das phasenrichtige Kompensationssignal für den aktiven Port senden. Für stark diagonaldominante MIMO-Systeme wie sie unter anderem bei den xDSL-Verfahren vorkommen, scheinen erste Simulationen darauf hinzuweisen, dass es keinen Sinn macht, phasenrichtige Kompensationssignale zu senden, da wegen der starken Dämpfung der Querkanäle kein nennenswerter Performancegewinn gegeben ist.

Angemerkt sei, dass alternativ zu dem oben beschriebenen Schema die MIMO-Prekompensationsvorverarbeitung beispielsweise auch auf dem Level der Schicht 3 Verarbeitung eines Routers durchgeführt werden kann (siehe Fig. 7), sofern a) noch Bandbreitenreserve des Backbone vorhanden ist und b) eine deterministische und bekannte Encapsulation-Strategie des Layer-2-Switch gegeben ist.

Erfindungsgemäß werden also zur Übertragung von Daten über mehrere Kanäle über zumindest einen Kanal zusätzliche Daten übertragen. Durch die Übertragung dieser zusätzlichen Daten wird die Übertragung der Daten in zumindest einem der weiteren Kanäle vorteilhaft beeinflusst. Während in dem obigen Ausführungsbeispiel durch die Übertragung der zusätzlichen Daten die Übertragung von z.B. Nutzdaten auf den weiteren Kanälen derart beeinflusst wird, dass Störungen in den weiteren Kanäle reduziert werden, kann ebenso daran gedacht werden, durch die Übertragung der zusätzlichen Daten beispielsweise die Nutzdaten auf den weiteren Kanälen zu verstärken.

Des weiteren sei angemerkt, dass üblicherweise der Verbindungsaufbau von DMT-basierten Modems mit einer Initialisierungsphase begonnen wird, in der standardisierte Testsignale ausgesendet werden, die insbesondere zur Kanalidentifikation verwendet werden. Für die Identifikation der MIMO-Kanalmatrix ist eine herkömmliche Initialisierungsphase naturgemäß nicht ausreichend, da es nicht die Intention der standardisierten Verfahren ist, mehr als einen Port gleichzeitig zu betrachten.

Vorteilhaft kann daher mit Hilfe des erfindungsgemäßen Verfahrens das in den Gleichungen (5)-(8) beschriebene Konzept beim Aussenden von Testsignalen (so genannte Pilotsignale) zur MIMO-Kanalidentifikation während der eigentlichen Datenübertragungsphase angewendet werden. Insbesondere bei der Neuanschaltung eines Ports k kann Port l dazu beitragen, dass der MIMO-Koeffizient $h_{k,l}$ identifiziert werden kann: Die vordefinierten Leerdaten von Port l können bei Port k registriert werden und erlauben so die Identifikation des MIMO-Koeffizienten $h_{k,l}$. Ohne eine solche Maßnahme müssten bei der Erstanschaltung eines neuen Nutzers alle für Nebensprechen in Frage kommende und bereits aufgeschaltete Ports neu initialisiert werden.

Im Folgenden wird eine spezielle Ethernet-Variante der Cross-Layer Modulation ohne CPE-Upgrade erläutert. Dieses Ausführungsbeispiel besitzt den Vorteil, dass das erfindungsgemäße Verfahren somit auch bei Nutzung herkömmlicher Teilnehmerendgeräte durchführbar ist.

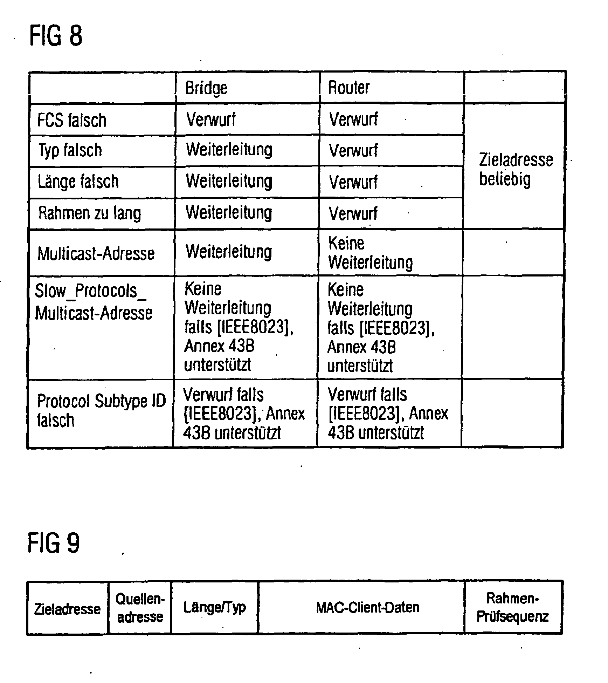

Die Kompensations-Ethernet-Rahmen werden in diesem Beispiel ausschließlich über die xDSL-Strecke übertragen. Beim Empfänger müssen diese Kompensations-Rahmen anschließend verworfen werden, da im Endgerät das neuartige, erfindungsgemäße Verfahren nicht implementiert ist. Somit muss ein Verfahren gefunden werden, das den Verwurf der Rahmen erzwingt und/oder die Weiterleitung der Rahmen verhindert. Hierzu muss in mindestens einer der Schichten oberhalb der physikalischen Schicht gezielt eines oder mehrere jener Kriterien verletzt werden, die für die Gültigkeit des Rahmens/Paketes in der betreffenden Schicht relevant sind. In der Tabelle aus Fig. 8 sind einige derartige Beispiele in Bezug auf Schicht 2 (bei Ethernet-Verfahren) aufgeführt.

Wie aus der Tabelle zu erkennen ist, hängt die Wirksamkeit der einzelnen Maßnahmen von der Betriebsart des Gerätes auf der Empfängerseite (z.B. CPE) ab. Arbeitet das Gerät auf der Empfängerseite als Router, so wird dort die Schicht 2 (d.h. das Ethernet) terminiert. Daher werden die empfangenen Ethernetrahmen nach allen standardmäßig geforderten Kriterien auf ihre Gültigkeit überprüft. In einer Bridge (Netzwerkbrücke) hingegen wird nur die so genannten "Frame Check Sequence" überprüft, die Rahmen werden anschließend weitergeleitet, ohne dass deren Inhalt untersucht wird.

Im Einzelnen können beispielsweise folgende Methoden durchgeführt werden:

Methode 1 arbeitet mit einem erzwungenen Verwurf der Ethernetrahmen. Hierbei werden die Ethernetrahmen durch den Empfänger verworfen, wenn diese als ungültig erkannt werden. Beispielsweise kann bewusst eine bezüglich des Rahmens falsche Frame Check Sequence übertragen werden, was jedoch unter Umständen eine Änderung der Hardware der xDSL-Transceiverbausteine erfordert. Eine Implementierung ist daher vergleichsweise aufwendig.

Einfacher zu implementieren sind beispielsweise Methoden, die den Ethernetrahmen bereits im MAC-Client manipulieren. Wie in Fig. 9 zu sehen, liefert der MAC-Client (z.B. ein Netzwerkprozessor) auf der DSLAM-Linecard oder im CPE dem xDSL-Transceiverbaustein den Ethernetrahmen von der Destination Address bis inklusive dem Feld MAC Client Data. Die folgenden Methoden lassen sich durch im MAC-Client manipulierte Ethernetrahmen realisieren.

Auch Methode 2 nutzt einen erzwungenen Verwurf der Ethernetrahmen. In diesem Fall wird der Rahmen vom Empfänger verworfen, wenn im Length/Type-Feld ein nicht unterstützter oder unbekannter Typ (Ethertype) eingetragen wird, wenn die Länge des Rahmens absichtlich die maximal zulässige Länge eines Rahmens überschreitet (vgl. [IEEE8023]) oder wenn der Wert im Length/Type-Feld zwar eine Längenangabe darstellt (d.h. wenn der Wert kleiner ist als 0x600), aber beispielsweise absichtlich auf einen nicht zutreffenden Wert gesetzt wird. Allerdings muss der Empfänger (DSLAM/CPE) dazu so konfiguriert sein, dass dieser den Ethertype bzw. die Rahmenlänge überprüft. In manchen Konfigurationen (z.B. bei einigen Bridges) werden die Ethernetrahmen ohne Prüfung der Schicht 2 sofort ins Netz weitergeleitet. Bei Übertragung von Kompensationsrahmen nur in Downstream-Richtung (d.h. vom DSLAM zum CPE) kann das Verfahren auch dann angewandt werden, wenn das CPE keine Prüfung durchführt, wenn also in Kauf genommen wird, dass die Kompensationsrahmen erst am Endgerät oder Router des Kunden verworfen werden.

Bei Verwendung der beiden Methoden 1 und 2 ist es unerheblich, welche Zieladresse (Destination Address) verwendet wird.

Bei einer dritten beispielhaften Methode wird eine Weiterleitung der entsprechenden Ethernetrahmen verhindert. Dabei muss sichergestellt sein, dass die Kompensations-Ethernet-Rahmen vom DSLAM genau an das CPE und die Rahmen vom CPE genau an den DSLAM (bei Betrieb in Upstream-Richtung) adressiert werden. Unbekannte MAC-Zieladressen führen dazu, dass die Ethernetrahmen an alle weiteren Netzelemente weitergeleitet werden (so genanntes "Flooding"). Die gesuchten MAC-Zieladressen sind jedoch für das CPE und den DSLAM jeweils erst dann bekannt, wenn das CPE im Netz angemeldet ist. Erst zu diesem Zeitpunkt sind die MAC-Adresse des CPEs im DSLAM und die MAC-Adresse des DSLAMs im CPE bekannt. Um die Cross-Layer-Modulation auch dann einsetzen zu können, wenn noch keine regulären Ethernetrahmen zwischen CPE und DSLAM ausgetauscht worden sind, müssen Broadcast- bzw. Multicast-MAC-Zieladressen verwendet werden. Falls der DSLAM bzw. das CPE als Bridge konfiguriert sind, werden jedoch auch an eine Broadcast-/Multicast-Adresse adressierte Rahmen weitergeleitet. Abhilfe bietet in einem solcehn Fall beispielsweise die Slow_Protocols_Multicast-Adresse aus [IEEE8023], Annex 43B. Ethernetrahmen, die an eine derartige Slow_Protocols_Multicast-Adresse adressiert sind, werden definitionsgemäß nicht weitergeleitet.

Methode 4 arbeitet mit einem erzwungenen Verwurf der Rahmen unter Benutzung einer Slow_Protocols_ Multicast-Adresse. Bei Verwendung der Slow_Protocols_Multicast-Adresse kann der Kompensations-Ethernetrahmen als Rahmen eines Slow Protocols ausgegeben werden. Dies geschieht durch Verwendung des Slow_Protocols_Type-Wertes im Length/Type-Feld des Rahmens (vgl. [IEEE8023], Annex 43B). Der Protocol Subtype Identifier, der folgend auf das Length/Type-Feld das verwendete Slow Protocol kennzeichnet, kann hierbei auf einen unerlaubten Wert gesetzt werden, um den Verwurf zu erzwingen. Geeignete Werte dazu sind laut [IEEE8023], Tabelle 43B-3, die Werte 0 und 11 bis 255. Rahmen mit ungültigen bzw. unerlaubten Protocol Subtype Identifiern werden vom Empfänger verworfen.

**Patentansprüche**

1. Verfahren zur Übertragung von Daten über mehrere Kanäle ($h_N(t)$) wobei Störeinflüsse, die sich aus dem Nahnebensprechen und dem Fernnebensprechen ergeben, existieren, wobei über zumindest einen Kanal ($h_k(t)$) zusätzliche Daten ($\vec{d}$) übertragen werden und durch die übertragung der zusätzlichen Daten ($\vec{d}$) die Übertragung der Daten in zumindest einem der weiteren Kanäle ($h_N(t)$, N≠k) hinsichtlich den Störeinflüssen gezielt beeinflusst wird, **dadurch gekennzeichnet,**

   **dass** die zusätzlichen Daten ($\tilde{\tilde{\vec{d}}}$) in Phasen, in denen auf dem zumindest einen Kanal ($h_k(t)$) keine Nutzdaten übertragen werden, übertragen werden.

2. Verfahren nach Anspruch 1,
   **dadurch gekennzeichnet,**
   **dass** die Übertragung der Daten in dem zumindest einen der weiteren Kanäle ($h_N(t)$, N≠k) derart beeinflusst wird, dass Störungen in dem zumindest einen der weiteren Kanäle ($h_N(t)$, N≠k) verringert werden.

3. Verfahren nach einem der vorhergehenden Ansprüche,
   **dadurch gekennzeichnet,**
   **dass** die zusätzlichen Daten ($\tilde{\tilde{\vec{d}}}$) an einem Empfänger verworfen werden.

4. Verfahren nach Anspruch 3,
   **dadurch gekennzeichnet,**
   **dass** die zusätzlichen Daten ($\tilde{\tilde{\vec{d}}}$) derart ausgestaltet werden, dass die zusätzlichen Daten ($\tilde{\tilde{\vec{d}}}$) aufgrund einer Verletzung von Kriterien in mindestens einer der Schichten oberhalb der physikalischen Schicht, die für eine Gültigkeit der zusätzlichen Daten ($\tilde{\tilde{\vec{d}}}$) in dem Empfänger relevant sind, verworfen werden.

5. Verfahren nach Anspruch 4,
   **dadurch gekennzeichnet,**
   **dass** die Kriterien durch das Ethernet-Verfahren definiert werden.

6. Verfahren nach einem der vorhergehenden Ansprüche,
   **dadurch gekennzeichnet,**
   **dass** die Übertragung der Daten gemäß einem xDSL-Verfahren erfolgt.

7. Verfahren nach einem der vorhergehenden 3 bis 6,
   **dadurch gekennzeichnet,**
   **dass** die Übertragung der Daten gemäß dem Ethernet-Standard erfolgt und/oder das Verwerfen der zusätzlichen Daten ($\tilde{\tilde{\vec{d}}}$) aufgrund einer Verletzung einer Vorgabe des Standards IEEE 8023 erfolgt.

8. Einrichtung zur Übertragung von Daten über mehrere Kanäle ($h_N(t)$) wobei Störeinflüsse, die sich aus dem Nahnebensprechen und dem Fernnebensprechen ergeben, existieren,

   mit Übertragungsmitteln zum Übertragen von zusätzlichen Daten ($\tilde{\tilde{\vec{d}}}$) über zumindest einen Kanal ($h_k(t)$), wobei die Übertragungsmittel derart ausgestaltet sind, dass durch die Übertragung der zusätzlichen Daten ($\tilde{\tilde{\vec{d}}}$) die Übertragung der Daten in zumindest einem der weiteren Kanäle ($h_N(t)$, N≠k) hinsichtlich den Störeinflüssen gezielt beeinflusst wird, **dadurch gekennzeichnet,**

   **dass** die zusätzlichen Daten ($\tilde{\tilde{\vec{d}}}$) in Phasen, in denen auf dem zumindest einen Kanal ($h_k(t)$) keine Nutzdaten übertragen werden, übertragen werden.übertragen werden.

**9.** Einrichtung nach Anspruch 8,
**dadurch gekennzeichnet,**
**dass** die Übertragungsmittel derart ausgestaltet sind, dass die Übertragung der Daten in dem zumindest einen der weiteren Kanäle ($h_N$(t), N≠k) derart beeinflusst wird ($h_N$(t), N≠k), dass Störungen in dem zumindest einen der weiteren Kanäle ($h_N$(t), N≠k) verringert werden.

**10.** Einrichtung nach Anspruch 9,
**dadurch gekennzeichnet,**

**dass** die Übertragungsmittel derart ausgestaltet sind, dass die zusätzlichen Daten ($\tilde{\tilde{d}}$) derart ausgestaltet werden,

dass die zusätzlichen Daten ($\tilde{\tilde{d}}$) aufgrund einer Verletzung von Kriterien in mindestens einer der Schichten oberhalb der physikalischen Schicht, die für eine Gültigkeit der zusätzlichen Daten ($\tilde{\tilde{d}}$) in einem Empfänger relevant sind, verworfen werden.

**Claims**

**1.** Method for transferring data via a plurality of channels ($h_N$(t)), wherein interfering influences exist which result from near-end crosstalk and far-end crosstalk, wherein at least one channel ($h_k$(t)) is used to transfer additional data ($\tilde{\tilde{d}}$)

and the transfer of the additional data ($\tilde{\tilde{d}}$) influences the transfer of the data in at least one of the further channels ($h_N$(t), N≠k) in a specific manner with respect to the interfering influences, **characterized in that** the additional data

($\tilde{\tilde{d}}$) are transferred in phases in which no user data are transferred on the at least one channel ($h_k$(t)).

**2.** Method according to Claim 1,
**characterized**
**in that** the transfer of the data in the at least one of the further channels ($h_N$(t), N≠k) is influenced such that interference in the at least one of the further channels ($h_N$(t), N≠k) is reduced.

**3.** Method according to one of the preceding claims,
**characterized**

**in that** the additional data ($\tilde{\tilde{d}}$) are rejected at a receiver.

**4.** Method according to Claim 3,
**characterized**

**in that** the additional data ($\tilde{\tilde{d}}$) are in a form such that the additional data ($\tilde{\tilde{d}}$) are rejected on the basis of an infringement of criteria in at least one of the layers above the physical layer, which criteria are relevant to the validity of the additional data ($\tilde{\tilde{d}}$) in the receiver.

**5.** Method according to Claim 4,
**characterized**
**in that** the criteria are defined by the Ethernet method.

**6.** Method according to one of the preceding claims,
**characterized**
**in that** the data are transferred in line with an xDSL method.

**7.** Method according to one of the preceding Claims 3 to 6,
**characterized**

**in that** the data are transferred in line with the Ethernet standard and/or the additional data ($\tilde{\tilde{d}}$) are rejected on the basis of an infringement of a guideline in the IEEE8023 standard.

8. Device for transferring data via a plurality of channels ($h_N(t)$), wherein interfering influences exist which result from near-end crosstalk and far-end crosstalk, having transfer means for transferring additional data ($\tilde{\tilde{d}}$) via at least one channel ($h_k(t)$), wherein the transfer means are in a form such that the transfer of the additional data ($\tilde{\tilde{d}}$) influences the transfer of the data in at least one of the further channels ($h_N(t)$, $N \neq k$) in a specific manner with respect to the interfering influences,
**characterized**

in that the additional data ($\tilde{\tilde{d}}$) are transferred in phases in which no user data are transferred on the at least one channel ($h_k(t)$).

9. Device according to Claim 8,
**characterized**
in that the transfer means are in a form such that the transfer of the data in the at least one of the further channels ($h_N(t)$, $N \neq k$) is influenced such ($h_N(t)$, $N \neq k$) that interference in the at least one of the further channels ($h_N(t)$, $N \neq k$) is reduced.

10. Device according to Claim 9,
**characterized**

in that the transfer means are in a form such that the additional data ($\tilde{\tilde{d}}$) are in a form such that the additional data ($\tilde{\tilde{d}}$) are rejected on the basis of an infringement of criteria in at least one of the layers above the physical layer, which criteria are relevant to the validity of the additional data ($\tilde{\tilde{d}}$) in a receiver.

## Revendications

1. Procédé de transmission de données sur plusieurs canaux ($h_N(t)$), des influences perturbatrices résultant de la paradiaphonie et de la télédiaphonie existant, des données supplémentaires ($\tilde{\tilde{d}}$) étant transmises sur au moins un canal ($h_k(t)$) et la transmission des données étant, dans au moins l'un des autres canaux ($h_N(t)$, $N \neq k$), influencée par la transmission des données supplémentaires ($\tilde{\tilde{d}}$) de manière ciblée pour ce qui est des influences perturbatrices,
**caractérisé en ce que** les données supplémentaires ($\tilde{\tilde{d}}$) sont transmises dans des phases dans lesquelles il n'y a pas transmission de données utiles sur l'au moins un canal ($h_k(t)$).

2. Procédé selon la revendication 1, **caractérisé en ce que** la transmission des données est, dans l'au moins un des autres canaux ($h_N(t)$, $N \neq k$), influencée de manière telle qu'il y a réduction de perturbations dans l'au moins un des autres canaux ($h_N(t)$, $N \neq k$).

3. Procédé selon l'une des revendications précédentes, **caractérisé en ce que** les données supplémentaires ($\tilde{\tilde{d}}$) sont rejetées au niveau d'un récepteur.

4. Procédé selon la revendication 3, **caractérisé en ce que** les données supplémentaires ($\tilde{\tilde{d}}$) sont telles que les données supplémentaires ($\tilde{\tilde{d}}$) sont rejetées en raison d'une violation, dans au moins l'une des couches au-dessus de la couche physique, de critères qui sont pertinents pour une validité des données supplémentaires ($\tilde{\tilde{d}}$) dans le récepteur.

5. Procédé selon la revendication 4, **caractérisé en ce que** les critères sont définis par la méthode Ethernet.

**6.** Procédé selon l'une des revendications précédentes, **caractérisé en ce que** la transmission des données s'effectue selon un procédé xDSL.

**7.** Procédé selon l'une des revendications précédentes 3 à 6, **caractérisé en ce que** la transmission des données s'effectue selon le standard Ethernet et/ou le rejet des données supplémentaires ($\tilde{\tilde{d}}$) se produit en raison d'une violation d'une spécification du standard IEEE 8023.

**8.** Dispositif de transmission de données sur plusieurs canaux ($h_N(t)$), des influences perturbatrices résultant de la paradiaphonie et de la télédiaphonie existant, avec des moyens de transmission pour transmettre des données supplémentaires ($\tilde{\tilde{d}}$) sur au moins un canal ($h_k(t)$), les moyens de transmission étant réalisés de manière telle que la transmission des données est, dans au moins l'un des autres canaux ($h_N(t)$, N≠k), influencée par la transmission des données supplémentaires ($\tilde{d}$) de manière ciblée pour ce qui est des influences perturbatrices, **caractérisé en ce que** les données supplémentaires ($\tilde{d}$) sont transmises dans des phases dans lesquelles il n'y a pas transmission de données utiles sur l'au moins un canal ($h_k(t)$).

**9.** Dispositif selon la revendication 8, **caractérisé en ce que** les moyens de transmission sont réalisés de manière telle que la transmission des données est, dans l'au moins un des autres canaux ($h_N(t)$, N≠k), influencée de manière telle qu'il y a réduction de perturbations dans l'au moins un des autres canaux ($h_N(t)$, N≠k).

**10.** Dispositif selon la revendication 9, **caractérisé en ce que** les moyens de transmission sont réalisés de manière telle que les données supplémentaires ($\tilde{d}$) sont telles que les données supplémentaires ($\tilde{\tilde{d}}$) sont rejetées en raison d'une violation, dans au moins l'une des couches au-dessus de la couche physique, de critères qui sont pertinents pour une validité des données supplémentaires ($\tilde{\tilde{d}}$) dans un récepteur.

FIG 1

CO

Schleifen-
Anlagenmodell

CPE

$x_1(t)$

$y_2(t)$

$h_{k, l}(t)$

$y_1(t)$

$x_2(t)$

$x_{2N-1}(t)$

$y_{2N}(t)$

$y_{2N-1}(t)$

$x_{2N}(t)$

EP 2 087 608 B1

**FIG 2**

$$\vec{b}_k(n)$$

L1_A_t

| Framer, CRC, Verwürfler | Verschachtler, RS-Coder, Ton-Anordnung | QAM-Abbildung |

$$M(\vec{b}_k(n))$$

$$X_{n,k}(m)$$

L1_B_t

| IFFT Addieren CP | D/A |

$$X_k(t)$$

**FIG 3**

$$Y_{n,k}(m)$$

$$y_k(t)$$

L1_B_r

| A/D TEQ | CP FFT Überspringen | FEQ-Slicer |

L1_A_r

| RS-Decoder, Entschachtler, Entwürfler |

$$\vec{b}_k(n)$$

$$M^{-1}(Y_{n,k}(m))$$

## FIG 4

```
X_{n,1}(m)  →  [ L1_B_t: Port 1 ]  →          →  [ L1_B_r: Port 1 ]  →  Y_{n,1}(m)

X_{n,2}(m)  →  [ L1_B_t: Port 2 ]  →   h_{k,l}  →  [ L1_B_r: Port 2 ]  →  Y_{n,2}(m)
                                                                              ⋮
X_{n,N}(m)  →  [ L1_B_t: Port N ]  →          →  [ L1_B_r: Port N ]  →  Y_{n,N}(m)

                              H_{k,l}(m)
```

## FIG 5

```
                 b⃗_k(n)        X_{n,k}(m)          X̃_{n,k}(m)

              →  [ L1_A_t ]  →              →  [ L1_B_t ]  →  x̃_1(t)
                 [ Port 1 ]                      [ Port 1 ]

  N           [       ]    →  [ L1_A_t ]  →   MIMO-      →  [ L1_B_t ]  →  x̃_2(t)
  Σ b⃗_k(n) →  [ L2-   ]       [ Port 2 ]     Vorkompen-      [ Port 2 ]
 k=1          [ Switch ]                      sation                           ⋮
              [       ]    →  [ L1_A_t ]  →              →  [ L1_B_t ]  →  x̃_N(t)
                             [ Port N ]      P_{k,l}(m)     [ Port N ]
```

## FIG 6

$\sum\limits_{k=1}^{N} \vec{d}_k(n)$

CL-MIMO-Vorkompen-sation

CL-freigegebener L2-Switch

$\tilde{\vec{b}}_k(n)$

$\tilde{X}_{n,k}(m)$

| L1_A_t Port 1 | L1_B_t Port 1 | $\tilde{x}_1(t)$ |
| L1_A_t Port 2 | L1_B_t Port 2 | $\tilde{x}_2(t)$ |
| L1_A_t Port N | L1_B_t Port N | $\tilde{x}_N(t)$ |

## FIG 7

$\sum\limits_{k=1}^{N} \tilde{\vec{b}}_k(n)$

$\tilde{\vec{b}}_k(n)$

$\tilde{X}_{n,k}(m)$

$\sum\limits_{k=1}^{N} \vec{d}_k(n)$

CL-MIMO-Vorkompen-sation

L3 Router

L2-Switch

| L1_A_t Port 1 | L1_B_t Port 1 | $\tilde{x}_1(t)$ |
| L1_A_t Port 2 | L1_B_t Port 2 | $\tilde{x}_2(t)$ |
| L1_A_t Port N | L1_B_t Port N | $\tilde{x}_N(t)$ |

## FIG 8

|  | Bridge | Router |  |
|---|---|---|---|
| FCS falsch | Verwurf | Verwurf | Zieladresse beliebig |
| Typ falsch | Weiterleitung | Verwurf | |
| Länge falsch | Weiterleitung | Verwurf | |
| Rahmen zu lang | Weiterleitung | Verwurf | |
| Multicast-Adresse | Weiterleitung | Keine Weiterleitung | |
| Slow_Protocols_ Multicast-Adresse | Keine Weiterleitung falls [IEEE8023], Annex 43B unterstützt | Keine Weiterleitung falls [IEEE8023], Annex 43B unterstützt | |
| Protocol Subtype ID falsch | Verwurf falls [IEEE8023], Annex 43B unterstützt | Verwurf falls [IEEE8023], Annex 43B unterstützt | |

## FIG 9

| Zieladresse | Quellen-adresse | Länge/Typ | MAC-Client-Daten | Rahmen-Prüfsequenz |
|---|---|---|---|---|

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004105287 A2

**In der Beschreibung aufgeführte Nicht-Patentliteratur**

- **G. Ginis ; J.M. Cioffi.** Vectored Transmission for Digital Subscriber Line Systems. *IEEE JSAC special issue on twistedpair transmission,* Juni 2002, vol. 20 (5), 1085-1104

- **G. Tauböck ; W. Henkel.** MIMO systems in the subscriber-line network. *5th International OFDM Workshop 2000,* 2000